# EUROPÄISCHE PATENTANMELDUNG

(11) **EP 0 895 887 A2**
(43) Veröffentlichungstag der Anmeldung: **10.02.1999**
(21) Anmeldenummer: 98113755.7
(22) Anmeldetag: 23.07.1998
(51) Int. Cl.: B60J 3/02

(54) **Sonnenblende für Fahrzeuge**

(30) Priorität: 08.08.1997 DE 19734347
(71) Anmelder: Johnson Controls Interiors GmbH, 42285 Wuppertal (DE)
(72) Erfinder: Nyznyk, Andre, 70800 Plainemont (FR); Jacquemin, Didier, 70300 Luxeuil les Bains (FR)

(57) **Zusammenfassung**

Beschrieben wird eine Sonnenblende mit Spiegel (5) und einem Deckel (7), der an einem Spiegelrahmen (6) über ein Filmscharnier (8) angeordnet ist, wobei der Spiegelrahmen (6) und der Deckel (7) einstückig aus Kunststoff gespritzt wird. Der Deckel (7) ist mittels Halteelemente bildender Winkellaschen (10) in der den Spiegel (5) abdeckenden als auch freigebenden Stellung gehalten.

## Beschreibung

Die Erfindung bezieht sich auf eine Sonnenblende für Fahrzeuge mit einem von einem spritzgegossenen Kunststoffrahmen gehaltenen Spiegel und einem spritzgegossenen Kunststoffdeckel über dem Spiegel, der mittels eines Filmscharniers in einstückiger und materialeinheitlicher Anordnung klappbar am Kunststoffrahmen befestigt ist.

Eine Sonnenblende der vorgenannten Art ist durch das deutsche Gebrauchsmuster 75 33 246 bekanntgeworden. Beim Gegenstand dieses Gebrauchsmusters kann der Kunststoffdeckel mittels eines Schnäppers oder einer Klipsleiste in der auf den Spiegel aufgeklappten Stellung gehalten werden, während eine Halterung für den Kunststoffdeckel in der vom Spiegel weggeklappten Stellung nicht vorgesehen ist. Der Kunststoffdeckel kann daher nur von oben nach unten in eine äußerst labile Offenlage nicht aber von unten nach oben in eine Offenlage geklappt werden, was aber oftmals gewünscht ist.

Der Erfindung liegt hiernach ausgehend von einer Sonnenblende der eingangs genannten Art die Aufgabe zugrunde, Vorsorge dafür zu treffen, daß der Kunststoffdeckel durch Halteelemente sowohl in der vom Spiegel weggeklappten als auch in der auf den Spiegel aufgeklappten Stellung gehalten wird, so daß der Kunststoffdeckel wahlweise an der oberen als auch unteren Randkante, ggf. aber auch an den seitlichen Randkanten des Kunststoffrahmens angelenkt werden kann. Darüber hinaus wird eine besonders kostengünstige Anlenkung des Kunststoffdeckels am Kunststoffrahmen und eine besonders einfache und kostengünstige Ausbildung der Halteelemente zum Halten des Kunststoffdeckels angestrebt.

Zur Lösung dieser Aufgabe ist erfindungsgemäß vorgesehen, daß das Filmscharnier an zumindest einer Stelle unterbrochen ist und daß die bzw. jede Unterbrechungslücke bis auf seitliche Luftspalte durch eine Winkellasche ausgefüllt ist, die sich mit einem Schenkel in den Kunststoffrahmen und mit dem anderen Schenkel in den Kunststoffdeckel hinein erstreckt und einendig über ein Filmscharnier mit dem Kunststoffrahmen und anderendig über ein Filmscharnier mit dem Kunststoffdeckel einstückig und materialeinheitlich ausgebildet ist.

Die zumindest eine Winkellasche bildet ein Halteelement, welches den Kunststoffdeckel sowohl in der vom Spiegel weggeklappten als auch in der auf den Spiegel aufgeklappten Stellung zuverlässig hält. Bei auf den Spiegel aufgeklappter Stellung des Kunststoffdeckels bildet die Winkellasche eine starre Verbindung zwischen dem Kunststoffdeckel und dem Kunststoffrahmen, so daß es der Anordnung von Schnäpperelementen oder dgl. nicht mehr bedarf. Wird der Kunststoffdeckel aus dieser Stellung in die vom Spiegel weggeklappte Stellung bewegt, so erfolgt eine Schwenkbewegung um das deckelseitige Filmscharnier und eine Zwangsmitnahme der zumindest einen Winkellasche, die dabei um ihre endseitigen Filmscharniere schwenkt und überschnappt sobald die endseitigen Winkellaschenscharniere die Totpunktlage zum deckelseitigen Filmscharnier überschreiten. In dieser Stellung ist eine zuverlässige Halterung des Kunststoffdeckels in der vom Spiegel weggeklappten Stellung gegeben, und zwar unabhängig davon, ob der Kunststoffdeckel von oben nach unten, von unten nach oben oder auch zur Seite vom Spiegel weggeklappt wird.

Die Erfindung wird nachstehend anhand einer in der Zeichnung dargestellten Ausführungsform des näheren erläutert. Es zeigen:

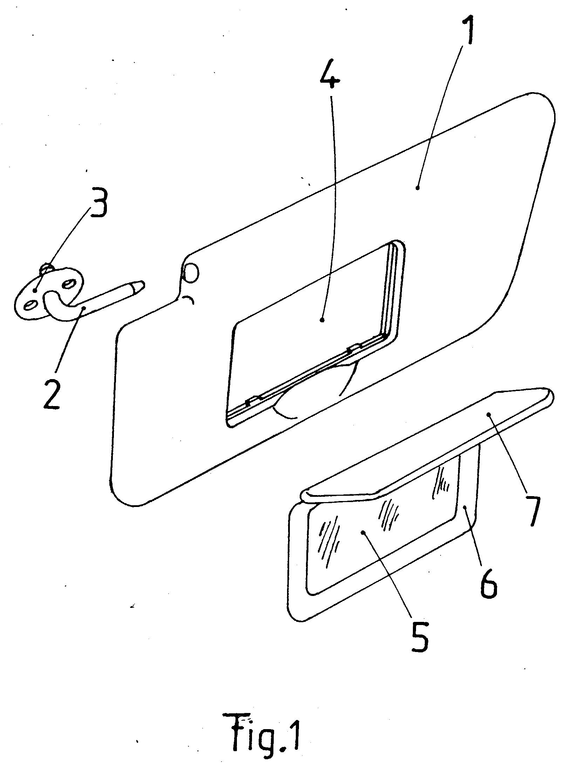

- Fig. 1: eine auseinandergezogene Darstellung einer Sonnenblende mit Achse und Spiegel,

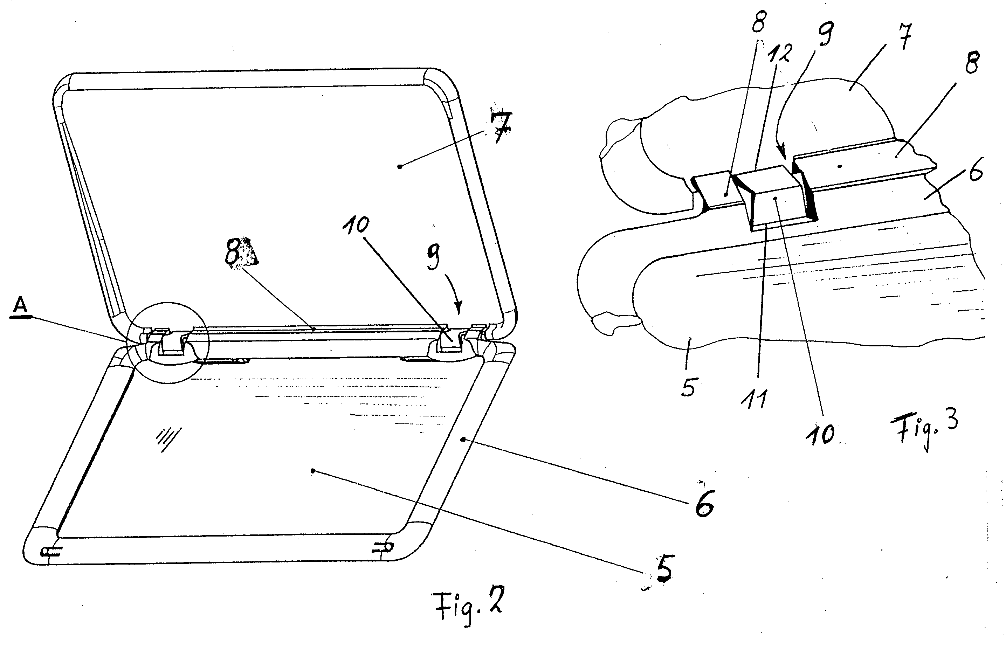

- Fig. 2: eine gegenüber Fig. 1 verdrehte Darstellung des in einem Kunststoffrahmen gehaltenen Spiegels mit Kunststoffdeckel und
- Fig. 3: die Einzelheit A nach Fig. 2 in vergrößertem Maßstab.

Ein im allgemeinen gepolsterter Sonnenblendenkörper 1 weist eine Achse 2 mit einem Böckchen 3 auf, mittels derer der Sonnenblendenkörper 1 an der Karosserie eines Kraftfahrzeugs in der Nähe der Windschutzscheibe zu befestigen ist.

Die Lagerung der Achse 2 im Sonnenblendenkörper 1 und im Böckchen 3 gestattet es, den Sonnenblendenkörper 1 sowohl nach unten gegen die Windschutzscheibe als auch seitlich gegen ein Seitenfenster zu klappen. Eine Vertiefung 4 im Sonnenblendenkörper 1 dient zur Aufnahme eines in einem Spiegelrahmen 6 gehaltenen Spiegels 5 mit einem Deckel 7. Diese Spiegeleinheit kann in die Vertiefung 4 z. B. mittels nicht dargestellter Rastungen eingeklipst werden.

Der Spiegelrahmen 6 ist ein spritzgegossener Kunststoffrahmen und der Deckel 7 ist ein spritzgegossener Kunststoffdeckel. Der Spiegelrahmen 6 ist mit dem Deckel 7 einstückig und materialeinheitlich ausgebildet, wobei als Verbindungselement zunächst ein Filmscharnier 8 vorgesehen ist. Das Filmscharnier 8 verbindet eine Randkante des Spiegelrahmens 6 mit einer Randkante des Deckels 7, so daß dieser schwenk- oder klappbeweglich mit dem Spiegelrahmen 6 verbunden ist.

Das Filmscharnier 8 ist a zumindest einer, vorzugsweise aber wie dargestellt an zwei Stellen unterbrochen, so daß Unterbrechungslücken 9 gebildet sind. Die Unterbrechungslücken 9 sind bis auf seitliche Luftspalte jeweils durch eine Winkellasche 10 ausgefüllt und jede Winkellasche 10 erstreckt sich mit einem Schenkel in den Spiegelrahmen 6 und mit dem anderen Schenkel in den Deckel 7 hinein. Die freien Enden der Schenkel gehen einstückig und materialeinheitlich unter jeweiliger Ausbildung eines Filmscharniers 11 und 12 zum einen in den Spiegelrahmen 6 und zum anderen in den Deckel 7 über. Die Filmscharniere 8, 11 und 12 verlaufen parallel zueinander, wobei das Filmscharnier 8 sich mittig zwischen den Filmscharnieren 11 befindet.

Die relativ formstabil ausgeführten Winkellaschen 10 bilden Halteelemente, um den Deckel 7 sowohl in der vom Spiegel weggeklappten als auch in der auf den Spiegel aufgeklappten Stellung zu halten. Das deckelseitige Filmscharnier 12 durchwandert bei der Überführung des Deckels 7 von der den Spiegel 5 abdeckenden in die den Blick in den Spiegel 5 freigebenden Lage die Totpunktlage, in der die Filmscharniere 8, 11 und 12 auf einer Linie liegen, und zwingt somit den Deckel in die jeweils gewünschte Stellung.

## Patentansprüche

1. Sonnenblende für Fahrzeuge mit einem von einem spritzgegossenen Kunststoffrahmen (6) gehaltenen Spiegel (5) und einem spritzgegossenen Kunststoffdeckel (7) über den Spiegel (5), der mittels eines Filmscharniers (8) in einstückiger und materialeinheitlicher Anordnung klappbar am Kunststoffrahmen (6) befestigt ist, dadurch gekennzeichnet, daß das Filmscharnier (8) an zumindest einer Stelle unterbrochen ist und daß die bzw. jede Unterbrechungslücke (9) bis auf seitliche Luftspalte durch eine Winkellasche (10) ausgefüllt ist, die sich mit einem Schenkel in den Kunststoffrahmen (6) und mit dem anderen Schenkel in den Kunststoffdeckel (7) hinein erstreckt und einendig über ein Filmscharnier (11) mit dem Kunststoffrahmen (6) und anderendig über ein Filmscharnier (12) mit dem Kunststoffdeckel (7) einstückig und materialeinheitlich ausgebildet ist.
